# FASCICULE DE BREVET EUROPEEN

(11) **EP 1 417 276 B1**
(45) Date de publication et mention de la délivrance du brevet: **14.11.2012**
(21) Numéro de dépôt: 02755075.5
(22) Date de dépôt: 17.06.2002
(51) Int. Cl.: C09J 101/00, C09J 101/26, C09J 11/00

(54) **ADHESIF SOUS FORME DE SACHET HYDROSOLUBLE**
KLEBSTOFF IN FORM EINES WASSERLÖSLICHEN BEUTELS
ADHESIVE PROVIDED IN THE FORM OF A WATER-SOLUBLE SACHET

(30) Priorité: 18.06.2001 FR 0107949
(43) Date de publication de la demande: 12.05.2004
(73) Titulaire: BOSTIK SA, 92400 Courbevoie (FR)
(72) Inventeur: PENLOUP, Didier, F-60280 Venette (FR)
(74) Mandataire: Hirsch & Associés
(86) Numéro de dépôt international: PCT/FR2002/002076
(87) Numéro de publication internationale: WO 2002/102913

(56) Documents cités:
- EP-A- 0 406 170
- WO-A-91/17202
- PATENT ABSTRACTS OF JAPAN vol. 016, no. 118 (C-0922), 25 mars 1992 (1992-03-25) & JP 03 287683 A (TOKIWA KOGYO KK), 18 décembre 1991 (1991-12-18) cité dans la demande

## Description

L'invention concerne des adhésifs, en particulier pour la préparation d'adhésifs aqueux pour l'application de colle papier peints, leur fabrication ainsi que leur utilisation.

On utilise depuis longtemps les adhésifs sous forme de dispersion aqueuse de polymères naturels, principalement de dérivés de cellulose et d'amidon, éventuellement mélangés à des polymères synthétiques pour le collage de papier.

De tels produits sont commercialisés sous forme de poudre et/ou de paillettes à disperser dans une quantité d'eau déterminée. Dans l'eau, ils gonflent pour donner une dispersion visqueuse (empois), laquelle est alors prête à l'emploi.

Le problème majeur que peut poser ce type de produit est la formation de grumeaux. Celle-ci peut provenir d'une formulation inadaptée, d'un mélange insuffisant ou du non-respect du dosage préconisé. Elle peut également être la conséquence de la qualité d'eau ou d'autres facteurs difficilement maîtrisables. Une fois apparus, les grumeaux sont difficiles et parfois impossibles à éliminer. L'adhésif présente alors une viscosité et des propriétés de mise en oeuvre et de collage qui ne correspondent pas à l'objectif souhaité et qui peuvent parfois résulter en un collage insatisfaisant.

Ainsi, la préparation de ce type d'adhésifs n'est-elle pas toujours aisée. Cela est particulièrement problématique pour les non professionnels, nombreux à réaliser eux-mêmes ce type de travaux. Ce public en particulier est réceptif à une présentation sous forme prédosée du produit, simple à doser et de mise en oeuvre rapide et fiable.

On connaît de DE 31 03 338 des adhésifs pour papiers peints rapidement solubles. Ils sont obtenus par granulation humide de poudres fines d'éthers de cellulose hydrosolubles, éventuellement partiellement réticulées. Il s'avère cependant que ces formulations conduisent à des solutions d'adhésif qui ne sont pas exemptes de grumeaux. Par ailleurs, la teneur en eau de ces produits réduit considérablement leur stabilité au stockage. Enfin, la forte teneur en eau nécessite un dosage plus important et diminue donc le rendement.

On connaît par ailleurs de DE 42 00 188 des adhésifs pour papiers peints sous forme compactée prédosée pour une quantité d'eau déterminée. Comme la mise en solution de telles formes compactées est plus délicate, ils contiennent une substance dégageant un gaz au contact de l'eau. Ces adhésifs sont donc très sensibles à la présence d'eau et doivent être fabriquées et stockées dans des conditions strictement anhydres. En outre, ils contiennent une forte proportion en composés dégageant du gaz, ce qui réduit leur rendement.

Un adhésif sous forme prédosée est également connu de WO9903945. Cet adhésif comprend un agent désintégrant gonflant dans l'eau qui assiste la désintégration du comprimé dans l'eau. Les constituants de l'adhésif sont présents sous forme d'agrégats. Cependant, certains agents désintégrants gélifient sous l'action de l'eau, ce qui favorise l'apparition de grumeaux.

On connaît de JP 3287683 un adhésif à base d'amidon modifié granulé prédosé contenant très peu ou pas d'additifs et conditionné dans un sachet hydrosoluble. L'adhésif est obtenu par introduction du sachet dans l'eau, où il s'immerge sous l'effet de son poids, et par agitation suffisante. Cependant, ces adhésifs restent sujets aux grumeaux.

Ainsi, le problème que se propose de résoudre l'invention est de proposer des adhésifs prédosés dans des sachets hydrosolubles qui se désintègrent rapidement dans l'eau pour former une solution d'adhésif exempte de grumeaux.

Le problème est résolu grâce à une composition d'adhésif comprenant un adhésif cellulosique et un adhésif synthétique, contenue dans un sachet constitué d'un matériau choisi parmi le polyvinylalcool et les dérivés cellulosiques, et présentant une épaisseur comprise entre 10 et 100 micrométres, à la fois résistant et hydrosoluble. En effet, il a été constaté que la combinaison d'un adhésif spécifique avec un sachet en matière hydrosoluble spécifique, et présentant de préférence également de propriétés adhésives, conduit à un adhésif rapidement soluble et évite l'apparition de grumeaux.

Des dérivés cellulosiques adaptés sont par exemple la méthylcellulose et ses dérivés éthoxylés ou propoxylés, éthylcellulose, hydroxybutylcellulose, hydroxybutylméthylcellulose, hydroxyéthylcellulose, hydroxyéthyléthylcellulose, hydroxypropylcellulose, hydroxypropyl-méthylcellulose, hydroxyéthylméthylcellulose, méthylhydroxyéthylcellulose, méthylhydroxyéthylpropylcellulose, propylcellulose, la méthylcellulose et ses dérivés éthoxylés et propoxylés étant particulièrement préférés. Afin d'augmenter leur solubilité dans l'eau à pH légèrement basique, les dérivés cellulosiques peuvent être modifiés, par exemple par réticulation. Selon un mode de réalisation avantageux, l'adhésif comprend plusieurs dérivés cellulosiques. De préférence, l'adhésif cellulosique comprend de la méthylcellulose ou de la méthylhydroxyéthylcellulose.

Selon un mode de réalisation, l'adhésif synthétique est un acétate de polyvinyle. Selon un autre mode de réalisation, l'adhésif comprend de 15 à 60% en poids d'adhésif synthétique. Selon encore un autre mode de réalisation, l'adhésif comprend de 30 à 80% en poids d'adhésif cellulosique. Selon un autre mode de réalisation encore, l'adhésif comprend en outre 0 à 30% en poids d'amidon en poudre soluble à froid. L'adhésif peut en outre comprendre des charges et additifs.

Avantageusement, l'adhésif présente un temps de dissolution dans l'eau compris entre 5 et 30 minutes.

Le matériau d'emballage adéquat se dissout ou se désintègre rapidement dans l'eau pour libérer l'adhésif sans gêner sa dissolution. Le temps de mise en solution dépend du matériau ainsi que de son épaisseur. Un film trop épais conduira donc à un temps de dissolution excessif. Un film trop mince de matériau d'emballage en revanche risque de compromettre la résistance mécanique nécessaire pour la manipulation du sachet. Le matériau choisi aura donc une épaisseur optimale qui représente une bonne balance entre la vitesse de dissolution et la résistance mécanique. Ainsi, l'apparition de grumeaux est évitée et on peut disposer d'un adhésif prêt à l'emploi en un temps minimal. Le sachet présente une épaisseur comprise entre 10 et 100 micromètres, de préférence entre 20 et 50 micromètres.

Il a été trouvé que tous les matériaux hydrosolubles ne conviennent pas à la confection des sachets hydrosolubles selon l'invention. En effet, le film hydrosoluble doit répondre à un certain nombre d'exigences. Le matériau hydrosoluble présente en effet de préférence une bonne résistance au stockage dans le temps. II est également avantageux qu'il soit compatible avec une manipulation aisée. En outre, il convient de choisir avec soin l'adhésif en fonction du matériau d'emballage afin d'éviter toute incompatibilité qui pourrait conduire à l'apparition de grumeaux.

De préférence, le matériau constituant le sachet concourt en outre à la fonction de collage en présentant lui-même des propriétés adhésives. Le matériau du sachet est choisi parmi le polyvinylalcool ou des dérivés cellulosiques tels que la méthylhydroxypropylcellulose.

L'adhésif se présente de préférence sous forme de poudre. Il peut cependant également se présenter sous forme de granulés.

Les adhésifs synthétiques augmentent le pouvoir collant. Parmi les adhésifs synthétiques hydrosolubles sont appropriés par exemple l'acétate de polyvinyle, l'alcool de polyvinyle, le polyvinylpyrrolidone, le polyacrylamide, et les sels de l'acide polyacrylique. Par ailleurs, on peut utiliser des adhésifs synthétiques non hydrosolubles, de préférence sous forme de poudre redispersable. On peut alors citer les homopolymères ou copolymères d'ester de vinyle, de styrène, d'acrylate, d'acétate de vinyle ou de chlorure de vinyle

De préférence, l'adhésif comprend 30 à 80 %, en particulier 40 à 60% en poids d'adhésif cellulosique et 15 à 60, de préférence 20 à 45 % en poids d'adhésif synthétique.

L'adhésif peut comprendre en outre 0 à 30% en poids d'amidon en poudre soluble à froid. Cette composante secondaire agit sur l'adhésion et les propriétés de mise en oeuvre de l'adhésif. Les amidons choisis sont plus particulièrement des amidon à base de maïs modifié tels que le Dexylose® I 231 ou le Dexylose® H 235 de la société Roquette.

L'adhésif comprend en outre 0 à 30%, de préférence 5 à 20% en poids de charges. Des charges sont de préférence de type minéral comme les oxydes ou carbonates. De telles charges sont par exemple le SiO₂, le CaCO₃ le Na₂CO₃, des silicates ou des sulfates. En outre, il peut être avantageux d'ajouter d'autres additifs tels que des conservateurs qui viennent augmenter la durée de vie des solutions d'adhésifs une fois préparées et confèrent des propriétés antifongiques au film de colle encore humide ou sec sous le papier peint une fois ce dernier posé.

De préférence, l'adhésif présente un temps de dissolution compris entre 5 et 30 minutes, de préférence 7 à 15 minutes. Si le temps de dissolution est trop court, le risque de formation de grumeaux est plus élevé et si le temps est trop long, on perd l'avantage de l'utilisation d'une dose rapide et facile à préparer.

L'invention porte également sur un procédé de préparation d'un adhésif pour papiers peints comprenant l'étape de mise en solution d'un tel sachet hydrosoluble dans une quantité déterminée d'eau. De préférence, l'adhésif est formulé et dosé de manière à obtenir après dissolution dans l'eau une composition ayant une viscosité Brookfield comprise entre 5000 et 30000, de préférence entre 7000 et 25000 mPas, pour garantir de bonnes propriétés de mise en oeuvre de la colle papier peint.

L'invention propose également un procédé de préparation d'un sachet hydrosoluble contenant un adhésif cellulosique et un adhésif synthétique, comprenant les étapes de disposer une quantité déterminée d'adhésif sur un film de matériau hydrosoluble de dimension appropriée et de sceller le film autour de l'adhésif pour former un sachet.

L'invention sera expliquée plus en détail au moyen des exemples non limitatifs qui suivent. Toutes les indications de proportions sont données en poids.

### EXEMPLE 1

50 grammes d'une composition d'adhésif Glutolin®^{®} Supra (disponible chez Bostik Findley) à base de méthylcellulose et d'acétate de polyvinyle en poudre redispersable sont ensachés dans un film de polyvinylalcool d'une épaisseur de 38 micromètres. Le sachet est ensuite introduit dans un volume de 11 d'eau. La solution est agitée pendant une minute après un temps d'attente d'environ 20 secondes. Aucune présence de grumeaux n'est détectée visuellement. La solution obtenue est ensuite caractérisée par sa viscosité.

### EXEMPLE 2

50 grammes d'une composition d'adhésif comprenant 41% de méthylcellulose, 26% d'amidon de maïs en poudre prégélatinisé par extrusion, 27% d'acétate de polyvinyle en poudre redispersable et 7% d'additifs (Muropack® SP disponible chez Bostik Findley) sont ensachés dans un film de polyvinylalcool d'une épaisseur de 38 micromètres. Le sachet est ensuite introduit dans un volume de 11 d'eau. La solution est agitée pendant une minute après un temps d'attente d'environ 20 secondes. Aucune présence de grumeaux n'est détectée visuellement. La solution obtenue est ensuite caractérisée par sa viscosité.

### EXEMPLE 3

50 grammes d'une composition d'adhésif comprenant 50% de méthylhydroxyéthylcellulose, 40% d'acétate de polyvinyle en poudre redispersable, 9% de charges et 1% d'additifs (MBS® 13/41 disponible chez Bostik Findley) sont ensachés dans un film de polyvinylalcool d'une épaisseur de 38 micromètres. Le sachet est ensuite introduit dans un volume de 1 1 d'eau. La solution est agitée pendant une minute après un temps d'attente d'environ 20 secondes. Aucune présence de grumeaux n'est détectée visuellement. La solution obtenue est ensuite caractérisée par sa viscosité.

### EXEMPLE COMPARATIF 1

30 grammes d'une composition d'adhésif à base de carboxyméthylcellulose de sodium (Gabrosa® X 174 disponible chez Akzo Nobel) sont ensachés dans un film de polyvinylalcool d'une épaisseur de 38 micromètres. Le sachet est ensuite introduit dans un volume de 2 1 d'eau. La solution est agitée pendant une minute après un temps d'attente d'environ 20 secondes. La présence d'un nombre important de grumeaux est détectée visuellement.

### EXEMPLE COMPARATIF 2

50 grammes d'une composition d'adhésif comprenant du carboxyméthyléther-sel sodique de fécule de pommes de terre prégélatinisé (Emcol® UK-H5 disponible chez Emsland GmbH) sont ensachés dans un film de polyvinylalcool d'une épaisseur de 38 micromètres. Le sachet est ensuite introduit dans un volume de 1,161 d'eau. La solution est agitée pendant une minute après un temps d'attente d'environ 20 secondes. La présence de grumeaux est détectée visuellement. La solution obtenue est ensuite caractérisée par sa viscosité.

La viscosité est mesurée 30 minutes après le début de la préparation de l'adhésif à l'aide d'un viscosimètre Brookfield à 20°C sous la vitesse de 20 T/min avec une aiguille n° 6.

Le temps de mise en solution est mesuré de la manière suivante. Dans le godet d'un appareil de mesure rhéologique (Rhéomat), on introduit une quantité donnée d'adhésif dans de l'eau déminéralisée à 20°C. Ensuite, on enregistre la contrainte de cisaillement en fonction du temps sous une vitesse de rotation de 200T/min imposée à une pale à 8 trous. Le temps de mise en solution est défini comme étant le temps de cisaillement correspondant au pic maximum de contrainte sur la courbe enregistrée.

Les résultats sont rassemblés dans le tableau ci-dessous.

| Exemple | Temps de mise en solution de l'adhésif seul [min] | Dosage [g d'adhésif / litre d'eau] | Présence de grumeaux | Viscosité [mPas] |
|---|---|---|---|---|
| 1 | 6-8 | 50 | Non | 19400 |
| 2 | 20-25 | 50 | Non | 14300 |
| 3 | 10-15 | 50 | Non | 19000 |
| Comp. 1 | 25-30 | 15 | Oui | n.d. |
| Comp.2 | 2-3 | 43,1 | Oui | 22150 |

Pour la préparation de l'adhésif prêt à l'emploi, le sachet hydrosoluble selon l'invention est introduit dans la quantité appropriée d'eau. Le sachet flotte sur la surface de l'eau, avant de se dissoudre rapidement sans formation de grumeaux par simple agitation pendant une minute. La préparation est propre, ne dégage pas de poussières et ne nécessite pas de pesée. Sous son emballage, l'adhésif est protégé de l'humidité et peut être stocké sans dégradation notable de ses propriétés. L'adhésif sous forme ainsi emballé présente en outre l'avantage de réduire la quantité d'emballage inutile et de respecter l'environnement.

Bien entendu, l'invention est également utile pour d'autres applications d'adhésifs aqueux dans les domaines classiques de collage du papier, carton ou textile. De même il peut être envisagé une application à d'autres domaines dans lesquelles l'homogénéité des propriétés physiques et de l'aspect du produit obtenu par mélange de poudre dans de l'eau est importante. Ainsi, il serait possible d'envisager par exemple un enduit en poudre à base de plâtre, charges et additifs organiques destiné à être mélangé avec de l'eau dans des proportions données sous forme de sachet hydrosoluble.

## Revendications

1. Sachet hydrosoluble contenant un adhésif comprenant un adhésif cellulosique et un adhésif synthétique, et dans lequel le matériau du sachet est choisi parmi le polyvinylalcool et les dérivés cellulosiques; et dans lequel le sachet présente une épaisseur comprise entre 10 et 100 micromètres.

2. Sachet hydrosoluble selon la revendication 1, dans lequel l'adhésif cellulosique comprend de la méthylcellulose ou de la niéthylhydroxyéthylcellulose.

3. Sachet hydrosoluble selon la revendication 1 ou 2, dans lequel l'adhésif synthétique est un acétate de polyvinyle.

4. Sachet hydrosoluble selon l'une des revendications précédentes, dans lequel l'adhésif comprend de 30 à 80% en poids d'adhésif cellulosique.

5. Sachet hydrosoluble selon l'une des revendications précédentes, dans lequel l'adhésif comprend de 15 à 60% en poids d'adhésif synthétique.

6. Sachet hydrosoluble selon l'une des revendications précédentes, dans lequel l'adhésif comprend en outre 0 à 30% en poids d'amidon en poudre soluble à froid.

7. Sachet hydrosoluble selon l'une des revendications précédentes, dans lequel l'adhésif comprend en outre des charges et additifs.

8. Sachet hydrosoluble selon l'une des revendications précédentes, dans lequel l'adhésif présente un temps de dissolution dans l'eau compris entre 5 et 30 minutes.

9. Sachet hydrosoluble selon l'une des revendications précédentes, dans lequel le matériau constituant le sachet présente des propriétés adhésives.

10. Sachet hydrosoluble selon l'une des revendications précédentes, dans lequel le sachet présente une épaisseur comprise entre entre 20 et 50 micromètres.

11. Procédé de préparation d'un sachet hydrosoluble contenant un adhésif cellulosique et un adhésif synthétique, comprenant les étapes de :
- disposer une quantité déterminée d'adhésif selon l'une des revendications 1 à 10 sur un film de matériau hydrosoluble de dimension appropriée, le matériau étant choisi parmi le polyvinylalcool et les dérivés cellulosiques; et son épaisseur étant comprise entre 10 et 100 micromètres; et
- sceller le film autour de l'adhésif pour former un sachet.

12. Procédé selon la revendication 11, dans lequel le sachet est selon l'une des revendications 2 à 10.

13. Procédé de préparation d'un adhésif pour papiers peints comprenant l'étape de mise en solution d'un sachet hydrosoluble selon l'une des revendications 1 à 10 dans une quantité déterminée d'eau.

14. Procédé selon la revendication précédente, dans lequel l'adhésif est formulé et dosé de manière à obtenir après dissolution dans l'eau une composition ayant une viscosité Brookfield comprise entre 7000 et 25000 mPas.

## Claims

1. Water-soluble pouch containing an adhesive comprising an adhesive cellulose and a synthetic adhesive, and wherein the pouch material is selected from polyvinyl alcohol and cellulose derivatives, and wherein the pouch has a thickness of between 10 and 100 micrometers.

2. Water-soluble pouch according to claim 1, wherein the cellulose adhesive comprises methyl cellulose or methyl hydroxyethyl cellulose.

3. Water-soluble pouch according to Claim 1 or 2, wherein the synthetic adhesive is a polyvinyl acetate.

4. Water-soluble pouch according to any preceding claim, wherein the adhesive comprises from 30 to 80% by weight of cellulose adhesive.

5. Water-soluble pouch according to any preceding claim, wherein the adhesive comprises from 15 to 60% by weight of synthetic adhesive.

6. Water-soluble pouch according to any preceding claim, wherein the adhesive further comprises from 0 to 30% by weight of cold-soluble starch powder.

7. Water-soluble pouch according to any preceding claim, wherein the adhesive further comprises fillers and additives.

8. Water-soluble pouch according to any preceding claim, wherein the adhesive has a dissolution time in water of between 5 and 30 minutes.

9. Water-soluble pouch according to any preceding claim, wherein the material constituting the pouch has adhesive properties.

10. Water-soluble pouch according to any preceding claim, wherein the pouch has a thickness of between 20 and 50 micrometers.

11. A method for preparing a water-soluble pouch containing a cellulose adhesive and a synthetic adhesive, comprising the steps of:
- arranging a predetermined amount of adhesive according to one of Claims 1 to 10 on a film of water soluble material of appropriate size, the material being selected from polyvinyl alcohol and cellulose derivatives, and the pouch having a thickness of between 10 and 100 micrometers; and
- sealing the film around the adhesive to form a pouch.

12. The method according to claim 11, in which the pouch is in accordance with one of claims 2 to 10.

13. A method for preparing an adhesive for wallpaper comprising the step of dissolving a water-soluble pouch according to any of claims 1 to 10 in a determined quantity of water.

14. The method according to the preceding claim, wherein the adhesive is formulated and dosed in order to obtain, after dissolving in water, a composition having a Brookfield viscosity of between 7000 and 25,000 mPas.

## Patentansprüche

1. Wasserlöslicher Beutel, der einen Klebstoff enthält, umfassend einen Zelluloseklebstoff und einen synthetischen Klebstoff, wobei das Material des Beutels unter Polyvinylalkohol und den Zellulosederivaten ausgewählt wird, und wobei der Beutel eine Dicke zwischen 10 und 100 Mikrometer aufweist.

2. Wasserlöslicher Beutel nach Anspruch 1, bei dem der Zelluloseklebstoff Methylzellulose oder Methylhydroxyethylzellulose umfasst.

3. Wasserlöslicher Beutel nach Anspruch 1 oder 2, bei dem der synthetische Klebstoff ein Polyvinylazetat ist.

4. Wasserlöslicher Beutel nach einem der vorhergehenden Ansprüche, bei dem der Klebstoff 30 bis 80 Gew.-% eines Zelluloseklebstoffes umfasst.

5. Wasserlöslicher Beutel nach einem der vorhergehenden Ansprüche, bei dem der Klebstoff 15 bis 60 Gew.-% eines synthetischen Klebstoffes umfasst.

6. Wasserlöslicher Beutel nach einem der vorhergehenden Ansprüche, bei dem der Klebstoff ferner 0 bis 30 Gew.-% von kalt löslicher pulverförmiger Stärke umfasst.

7. Wasserlöslicher Beutel nach einem der vorhergehenden Ansprüche, bei dem der Klebstoff ferner Füllstoffe und Zusatzstoffe umfasst.

8. Wasserlöslicher Beutel nach einem der vorhergehenden Ansprüche, bei dem der Klebstoff eine Zeit für die Auflösung in Wasser zwischen 5 und 30 Minuten benötigt.

9. Wasserlöslicher Beutel nach einem der vorhergehenden Ansprüche, bei dem das Material, aus dem der Beutel besteht, Klebeeigenschaften besitzt.

10. Wasserlöslicher Beutel nach einem der vorhergehenden Ansprüche, bei dem der Beutel eine Dicke zwischen 20 und 50 Mikrometer aufweist.

11. Verfahren zur Herstellung eines wasserlöslichen Beutels, der einen Zelluloseklebstoff und einen synthetischen Klebstoff enthält, umfassend die folgenden Schritte, bestehend in:
- dem Auftragen einer bestimmten Menge eines Klebstoffes nach einem der Ansprüche 1 bis 10 auf eine Folie aus wasserlöslichem Material von geeigneter Abmessung, wobei das Material unter Polyvinylalkohol und den Zellulosederivaten ausgewählt wird, und wobei seine Dicke zwischen 10 und 100 Mikrometer beträgt, und
- dem Siegeln der Folie um den Klebstoff, um einen Beutel zu bilden.

12. Verfahren nach Anspruch 11, bei dem der Beutel einem der Ansprüche 2 bis 10 entspricht.

13. Verfahren zur Herstellung eines Klebstoffes für farbiges Papier, umfassend den Schritt des Auflösens eines wasserlöslichen Beutels nach einem der Ansprüche 1 bis 10 in einer bestimmten Menge Wasser.

14. Verfahren nach dem vorhergehenden Anspruch, bei dem der Klebstoff derart formuliert und dosiert ist, dass nach der Auflösung in Wasser eine Zusammensetzung erhalten wird, die eine Brookfield-Viskosität zwischen 7000 und 25000 mPas aufweist.
